Europäisches Patentamt

European Patent Office

Office européen des brevets

(11) Publication number: **0 299 676**
**A2**

## (12) EUROPEAN PATENT APPLICATION

(21) Application number: 88306198.8

(22) Date of filing: 07.07.88

(51) Int. Cl.⁴: **G01F 1/22**

(30) Priority: 09.07.87 US 71646

(43) Date of publication of application:
**18.01.89 Bulletin 89/03**

(84) Designated Contracting States:
**BE CH DE FR GB IT LI NL**

(71) Applicant: **Eidsmore, Paul George**
**2 Blue Hill Court**
**Scotts Valley California 95066(US)** ·

(72) Inventor: **Eidsmore, Paul George**
**2 Blue Hill Court**
**Scotts Valley California 95066(US)**

(74) Representative: **Jones, Colin et al**
**W.P. THOMPSON & CO. Coopers Building**
**Church Street**
**Liverpool L1 3AB(GB)**

(54) **Fluid flow indicator.**

(57) A fluid flow indicator comprises a housing (10) defining a cylindrical flow passage (12) having axially spaced first (14) and second (16) ends. A cylindrical piston (36) having first and second terminal ends and an exterior diameter which is substantially less than the diameter of the passage (12) is axially positioned in the passage (12) with its first terminal end facing the first end of the passage. The piston is mounted for sliding movement from a first position adjacent the first end (14) of the passage to a second position adjacent the second end (16) of the passage when the fluid flow through the passage exceeds a predetermined level. A flow passageway (40) extends through the piston from an inlet adjacent the first terminal end to a flow control outlet orifice (60) spaced axially from the first terminal end. A metering ring (30) surrounds the piston (36) at a location between the first terminal end of the piston (36) at a location between the first terminal end of the piston (36) and the outlet (60) of the flow passageway (40) when the piston (36) is in the first position at a location between the first end of said cylindrical passage (12) and the first terminal end of the piston (36) when the piston (36) is in the second position.

FIG.1

# FLUID FLOW INDICATOR

The present invention relates to sensing devices and, more particularly, to a device for indicating when fluid flow has exceeded a predetermined minimum rate.

Fluid flow indicators and particularly gas flow indicators are known from for example, US- A-2,963,563, US- A- 4,181,835 and US- A- 4,313,111. The indicators disclosed in each of these patents comprises a cylindrical magnetic piston slidably mounted in a cylindrical gas flow passageway so as to actuate a magnetic switch. Generally, the outer dimensions of the piston are chosen to be only slightly smaller than the diameter of the passageway so as to provide a narrow annular flow space between the piston and the passageway. When gas flow through the device reaches a predetermined level, the pressure build-up on the upstream end of the piston is sufficient to move the piston against a spring or gravity bias. Movement of the magnetic piston actuates an associated reed switch or the like, and provides an output signal which is indicative of a predetermined flow level.

Certain problems and inconsistencies are associated with these known devices. In particular, when using a magnet to activate a reed switch, small variations in magnetic strength, or slight differences in the orientation of the reeds, can produce relatively significant differences in the point at which actuation takes place.

The above problem is further compounded in certain known devices since their designs are such that movement of the piston in an actuating direction reduces the length of the flow restriction. Thus, as the piston begins moving toward the actuating point, an increasingly greater flow rate is required to keep the piston moving. this tends to result in a "damping" of piston movement and leads to further inconsistencies in the point at which the switch is actuated.

In addition to the above, the known devices inherently act as flow limiting restrictions and thereby prevent flow levels significantly exceeding the point at which the minimum flow indication is produced. This is an undesirable characteristic in certain systems. for example, in some manufacturing and processing systems a certain minimum gas flow may be required for one phase of system operation but a much larger flow for a subsequent phase of operation or for system purging. To achieve the large flow volume differences with the known valves it is often necessary to install bypass piping systems, multiple valve manifolds or the like.

It would therefore be advantageous to provide a fluid flow indicator which does not exhibit the above-mentioned undesirable characteristics.

Also, a primary object of the invention is the provision of a flow indicator which is relatively simple in construction which can be manufactured or adjusted to activate the indication means at any of a wide range of selected flow rates.

A further object is the provision of a flow indicator of the type described which can provide a substantially instantaneous indication of actuation, at a certain predetermined minimum flow level and can then permit much greater rates of fluid flow.

According to a first aspect of the present invention a fluid flow indicator is characterised by a flow passageway having a flow control orifice and extending through the piston from an inlet adjacent a first terminal end of the piston to an outlet spaced axially from said first terminal end, a metering ring formed circumferentially in the cylindrical passage and extending radially inwardly into close proximity with the exterior of the piston, the metering ring being located between said first terminal end of the piston and said outlet of the flow passageway when the piston is in a first position and located between a first end of the cylindrical passage and the first terminal end of the piston when the piston is in a second position, when fluid flow through the passage exceeds a predetermined value, and by means for indicating movement of the piston from the first position to the second position.

According to a second aspect of the present invention a fluid flow indicator is characterised by a circumferentially continuous metering ring extending radially inwardly from the interior wall of the cylindrical passage so a to define a section of reduced diameter and short axial length between the first and second ends of the cylindrical passage, the ring being axially located circumferentially about the piston so as to define an annular flow passage when the piston is in a first position and being located between the inlet end of the cylindrical passage and a first end face of the piston when said piston is in a second position, when fluid flow through the cylindrical passage exceeds a predetermined value.

The present invention provides a significant improvement in gas flow indicators of the known type. Indicators constructed in accordance with the invention are extremely consistent in operation and can advantageously handle flows greatly in excess of the minimum flow indicating point.

The use of the metering ring, located as described, determines that the quantity of fluid flow and the associated pressure drop for fluid passing about the piston does not significantly vary during movement of the piston from the first to the second position. That is, there is not a progressive increase in fluid flow as the piston begins moving toward the second position as is the case in certain know devices. Consequently, piston movement is not damped and taken place substantially with a snap action. When the piston is at the second position, it is no longer within the metering ring and fluid can flow through the full interior diameter of the metering ring. Thus, flow quantities greatly in excess of the predetermined minimum required for indicator actuation may pass directly through the indicator.

Preferably, the piston member of the second aspect of the present invention includes a flow passageway which extends therethrough from an inlet opening in an end face, to an outlet opening which is located between the metering ring and the fluid outlet end of the cylindrical passage, and advantageously, a metering orifice is formed in the passageway.

Through the use of the piston passageway and its metering orifice, the fluid flow level at which indicator actuation takes place is not solely dependent on the size of the annular flow passage between the piston and the metering ring. Thus, fluid flow indicators having common size bodies, pistons, and metering rings can be provided with a variety of different actuation points merely by varying the metering orifice in the piston passageway. This, of course, simplifies the manufacturing and corrects use of the respective flow indicators.

The invention is described further hereinafter by way of example only, with reference to the accompanying drawings, in which:-

Fig. 1 illustrates a longitudinal cross-section through one embodiment of a flow indicating device in accordance with the present invention;

Fig. 2 illustrates the device of Fig. 1 with the flow indicator moved to a minimum flow indication position;

Fig. 3 illustrates a cross-section taken on the line 3-3 of Fig. 1;

Fig. 4 illustrates a cross-section taken of the line 4-4 of Fig. 1; and

Fig. 5 illustrates a longitudinal cross-sectional through another embodiment of a flow indicating device in accordance with the present invention with the flow indicator moved to minimum flow indication position.

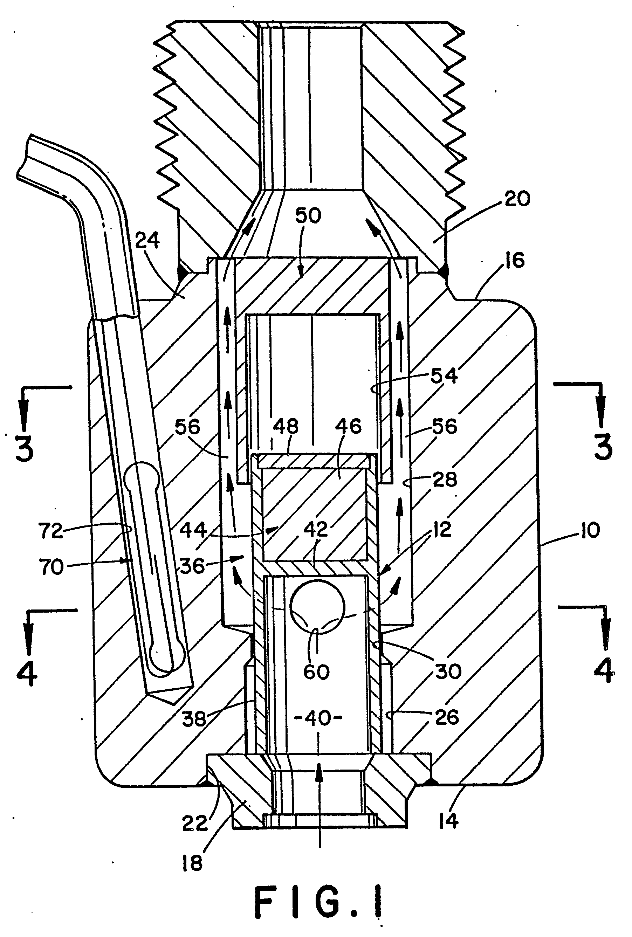

Fig. 1 shows the overall arrangement of a fluid flow indicating device formed in accordance with a preferred embodiment of the present invention. Generally, the device of Fig. 1 comprises a cylindrical main body 10 formed from any suitable material such as stainless steel o the like. The body 10 includes an axially aligned, generally cylindrical through-passage 12 which extends from the lower end face 14 to the upper end face 16 of the body 10. The body 10 is provided with inlet and outlet fittings 18 and 20 respectively. The inlet fitting 18 comprises a welding fitting that is suitable welded to a counterbore 22 formed in the lower end face 14 of the body 10. The outlet fitting 20 has an outer thread and is welded or otherwise secured to a boss 24 extending from the end face 18 of the body 10 in the region of the upper end of the flow passage 12.

The flow passage 12 has a generally cylindrical configuration and includes a first passage section 26 which connects with the inlet fitting 18. A second, generally cylindrical section 28 is axially aligned with the section 26 and connects to the outlet fitting 20. A relatively narrow, reduced diameter metering ring section 30 is disposed between the sections 26 and 28.

The purpose and function of the metering ring section 30 is described hereinbelow. However, for the present it should be noted that the metering section 30 can be formed integrally with the body 10 during the formation of the flow passage 12 or, alternatively, it can be installed as a separate component. A piston member 36 is located within the flow passage 12. The piston member 36 has a cylindrical outer wall 38 with a diameter only slightly smaller than the inner diameter of the metering ring section 30. The lower end of the piston member 36 is open and defines an inwardly extending cylindrical chamber 40. The upper or inner end of the chamber 40 is defined by a transverse wall 42. The upper end of the piston member 36 defines a second chamber 44. The chamber 44 contains a magnet member 46. The upper end of the chamber 44 is closed by a transverse end wall 48 welded or otherwise joined to the outer wall 38.

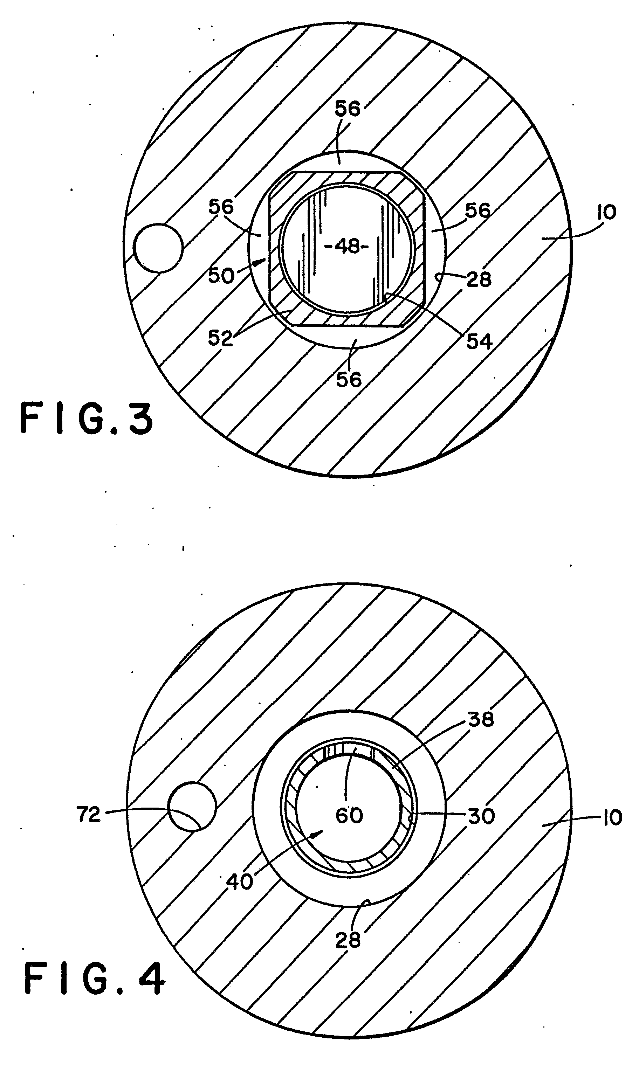

A guide assembly 50 is mounted at the upper end of the flow passage 12. The guide assembly 50 is further illustrated in Fig. 3 and comprises a generally square body 52 which has a cylindrical opening 54 extending axially inward from the lower end. The diameter of the opening 54 is only slightly larger than the diameter of the side wall 38 of piston member 36. As illustrated in Fig. 3, the square body 52 is press fitted or otherwise securely located in the flow passage section 28 at the location shown. The square configuration of the body 52 provided four flow passages 56 about the exterior thereof.

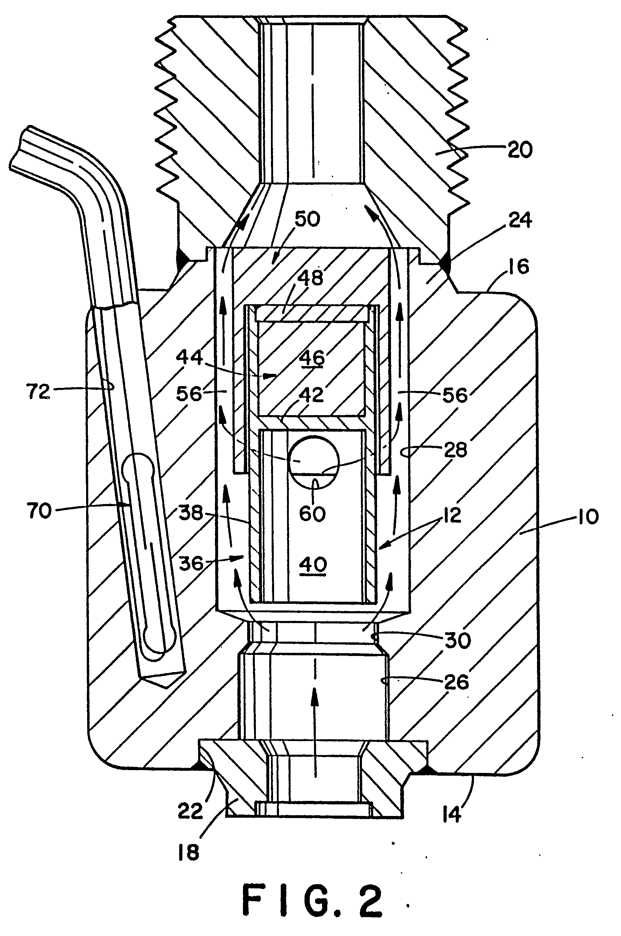

Fig. 1 illustrates the device in a low or no flow condition. That is, the piston member 36 is in its lower most position resting on the inlet fitting 18. Fluid entering the inlet flows into the chamber 40, and the fluid flow from chamber 40 is controlled by a control orifice 60 formed through the side wall 38 of the piston 36. The quantity of fluid which can pass through the orifice 60 is determined such that the pressure build-up within the chamber 40 is not sufficient to move the piston member upwardly until such fluid flow exceeds a predetermined minimum. The fluid passing through the flow control orifice 60 passes about the exterior of the piston member 36 and through the above-mentioned passages 56, to the outlet end of the flow passage 12. When the fluid flow exceeds the predetermined minimum rate, the piston member 36 moves upwardly and the fluid flows about the exterior of the piston 38 and through the annular space between the exterior of the piston 38 and through the annular space between the exterior of the piston 38 and the metering ring section 30. Since the annular space has a short length, the fluid flow through this area remains substantially constant throughout the upward movement of the piston 36. That is, the resistance to fluid flow offered by the metering ring section 30, in combination with the exterior of the piston is significantly greater than any flow resistance encountered in the annular space beneath the metering ring section 30. Consequently, when the fluid flow exceeds the predetermined minimum rate there is a rapid build-up of fluid pressure under the piston member 36 causing it to move, substantially with a 'snap like' action to its upper position illustrated in Fig. 2. The location of the metering orifice 60 relative to the metering ring section is such that the metering ring section 30 is always upstream of the orifice 60, as illustrated in Fig. 1.

When the piston member 36 is in a fully open position, the lower end of the piston, is located above the metering ring section 30. Consequently, fluid can flow about the lower edge of the piston and directly about the exterior of the piston to the outlet passages 56. Thus, once the minimum flow level is exceeded, the device can operate with a high fluid flow rate, since neither the metering ring section 30 or the flow orifice 60 act so as to limit fluid flow.

In order to indicate that the minimum flow level has been exceeded, the device uses a magnetically operated reed switch 70 which is suitable mounted in a bore 72 which extends generally longitudinally into the body 10. The reed switch 70 is positioned such that movement of the piston 36 from the no flow position of Fig. 1 to the full flow position of Fig. 2 allows the magnet 46 to open or close the reed switch, depending upon the particular type of reed switch used. It should be appreciated that other types of actuation indicating means such as proximity switches and the like could equally well be used. An important aspect of the invention comprises the arrangement whereby a simple fluid actuated piston member is moved with a snap action to a fully open position, in which the fluid quantity which can pass through the device is many times in excess of that required to produce actuation of the unit.

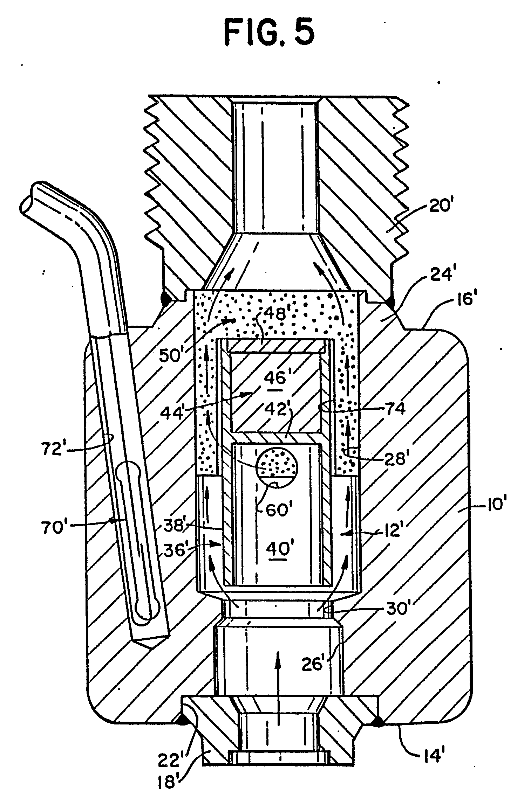

Fig. 5 illustrates a second embodiment of the invention. The embodiment of Fig. 5 is generally the same in most aspects as that illustrated in Figs. 1 to 4. Consequently, the same reference numerals differentiated by the addition of a prime suffix (′) have been used to identify the corresponding components. The description of one such component is to be taken as applicable to the other unless otherwise noted.

In Fig. 5, the guide assembly comprises a generally cup-shaped body 50′ formed of a highly porous, sintered, powdered metal. The body 50′ has a central opening 74 adapted to closely but freely receive the piston member 36′ as shown. The dimensions of the exterior of the body 50′ are such that it is fixed in the passage 121 in the position shown, by being press fitted or suitably bonded therein.

By appropriate selection of the material from which the member 50′ is formed, the fluid flow indicator can also perform a filtering function in addition to its guiding function.

The present invention is especially suited for use as a gas flow switch to produce an electrical signal when gas flow through the device has reached a set level, and the invention could also be embodied in other devices which, for example, provide a mechanical or pneumatic output signal.

## Claims

1. A fluid flow indicator comprising a housing (10) defining a cylindrical passage (12), fluid supply means (18) for supplying fluid to a first end of said cylindrical passage (12), fluid discharge means (20) for discharging fluid from a second end of said cylindrical passage (12), a cylindrical piston (36) having an exterior diameter which is substantially less than the diameter of said passage (12), said piston member (36) being axially positioned in said cylindrical passage (12) with a first terminal end of the piston facing said first end of said passage (12) and mounted for sliding movement from a first position adjacent said first end of said passage (12) to a second position adjacent the second end of said cylindrical passage (12) when fluid flow through said cylindrical passage (12) exceeds a predetermined level, characterised by a flow passageway (40) having a flow control orifice (60) and extending through said piston from an inlet adjacent the first terminal end to an outlet spaced axially from said first terminal end, a metering ring (30) formed circumferentially in said cylindrical flow passage (12) and extending radially inwardly into close proximity with the exterior of said piston (36), said metering ring (30) located between said first terminal end of said piston (36) and said outlet of said flow passageway (40) when said piston (36) is in said first position and located between said first end of said cylindrical passage (12) and said first terminal end of said piston member (36) when said piston (36) is in said second position, and by means (70) responsive to movement of said piston (36) from said first position to said second position for providing a signal, exterior to said housing (10), for indicating movement of said piston (36).

2. A flow indicator as claimed in claim 1, further comprising piston guide means (50) mounted in the second end of said cylindrical flow passage (12) for maintaining said piston (36) in alignment with said metering ring (30) as said piston (36) moves from said first position to said second position.

3. A flow indicator as claimed in claim 1 or 2, wherein said piston (36) comprises a hollow cylindrical member having an open end facing said first end of said cylindrical flow passage.

4. A flow indicator as claimed in any of claims 1 to 3, wherein said metering ring (30) is circumferentially continuous and has a narrow apex portion closely spaced from the exterior of said piston (36) so as to define an annular flow passage.

5. A gas flow indicator as claimed in any of claims 1 to 4, wherein said flow passageway (40) opens laterally from said piston (36).

6. A fluid flow indicator including a housing (10) having an interior wall (26, 28) defining a cylindrical passage (12) having a fluid inlet end, and a fluid outlet end, a cylindrical piston (35) having axially spaced first and second end faces respectively facing said inlet end and said outlet end and which piston is slidably mounted in said passage for axial movement from a first position adjacent the inlet end to a second position adjacent the outlet end, in response to flow through the passage exceeding a predetermined minimum level, characterised by a circumferentially continuous metering ring (30) extending radially inwardly from said interior wall (26, 28) to define a section of reduced diameter and short axial length in said passage (12) intermediate said first and second ends, said ring being axially located circumferentially about said piston (35) to define an annular flow passage when said piston (36) is in said first position and being located between said inlet end of said passage (12) and the first end face of said piston (36) when said piston (36) is in said second position.

7. A flow indicator as claimed in claim 6, wherein said piston (36) includes a flow passageway (40) extending therethrough from an inlet opening in said first end face to an outlet opening which is between said metering ring (30) and said fluid outlet end of said cylindrical passage (12).

8. A gas flow indicator as claimed in claim 7, further comprising piston guide means (50) for maintaining said piston in alignment with said metering ring (30) when said piston (36) is in said second position.

9. A gas flow indicator as claimed in claim 7, further comprising a flow control orifice (60) in said flow passageway.

10. A gas flow indicator as claimed in any of claims 1 to 5 or 9, wherein said flow control orifice (60) is defined by the outlet opening of said passageway (40).

11. A gas flow indicator as claimed in any of claims 2 to 5 or 8, wherein said piston guide means comprises a porous body (50') positioned in said outlet end of said passage (12').

EP 0 299 676 A2

FIG.1

FIG. 2

EP 0 299 676 A2

FIG.3

FIG.4

# FIG. 5